# EUROPÄISCHE PATENTANMELDUNG

(11) **EP 4 273 618 A1**
(43) Veröffentlichungstag der Anmeldung: **08.11.2023**
(21) Anmeldenummer: 23167194.2
(22) Anmeldetag: 07.04.2023
(51) Int. Cl.: G02C 5/22

(54) **FEDERSCHARNIER FÜR EINE BRILLE**

(30) Priorität: 03.05.2022 AT 5007522 U
(71) Anmelder: REDTENBACHER Präzisionsteile Ges.m.b.H., 4644 Scharnstein (AT)
(72) Erfinder: Buchegger, Harald, 4817 St. Konrad (AT)
(74) Vertreter: Hübscher & Partner Patentanwälte GmbH

(57) **Zusammenfassung**

Es wird ein Federscharnier für eine Brille mit einem in einem bügelseitigen Gehäuse (2) entgegen der Kraft einer Schraubenfeder (6) in Bügellängsrichtung anschlagbegrenzt aus dem Gehäuse (2) ausziehbaren, mittleren Scharnierlappen (4), mit einer den mittleren Scharnierlappen (4) aufnehmenden Lagergabel (12) eines Bügelbackens (11) und mit einer den mittleren Scharnierlappen (4) mit der Lagergabel (12) gelenkig verbindenden Scharnierachse beschrieben. Um vorteilhafte Montagebedingungen zu schaffen, wird vorgeschlagen, dass der mittlere Scharnierlappen (4) zwei die Scharnierachse formende, in Lagerbohrungen (15) der Lagergabel (12) eingreifende Achsstummel (14) trägt, die auf der vom Gehäuse (2) abgewandten Seite eine achsparallele Abflachung (17) aufweisen, und dass die Lagergabel (12) in der Strecklage des Bügels (1) quer zur Bügellängsrichtung verlaufende Einführnuten (16) für die Achsstummel (14) mit einer an den zur Abflachung (17) senkrechten Durchmesser der Achsstummel (14) angepassten Nutbreite und mit einer die Abflachung (17) der Achsstummel (14) führenden Nutwand (18) bildet, die tangential zur Lagerbohrung (15) ausgerichtet ist.

## Beschreibung

Die Erfindung bezieht sich auf ein Federscharnier für eine Brille mit einem in einem bügelseitigen Gehäuse entgegen der Kraft einer Schraubenfeder in Bügellängsrichtung anschlagbegrenzt aus dem Gehäuse ausziehbaren, mittleren Scharnierlappen, mit einer den mittleren Scharnierlappen aufnehmenden Lagergabel eines Bügelbackens und mit einer den mittleren Scharnierlappen mit der Lagergabel gelenkig verbindenden Scharnierachse.

Solche Federscharniere sind in verschiedenen Ausführungsvarianten bekannt, denen gemeinsam ist, dass die Scharnierachse durch eine Schraube gebildet wird, die den einen Schenkel der Lagergabel sowie den mittleren Scharnierlappen in einem Lagerauge durchsetzt und in eine Gewindebohrung des gegenüberliegenden Schenkels der Lagergabel eingreift. Abgesehen von der Gefahr, dass sich bei einer wiederholten Scharnierbetätigung die die Scharnierachsen bildenden Schrauben lockern können, wird aufgrund einer solchen Ausführung eine werkzeuglose Montage ausgeschlossen. Dies gilt auch für ein Federscharnier (EP 3 882 688 A1), dessen mittlerer Scharnierlappen ein in einem Gehäuse verschiebbar gelagertes,
U-förmiges Gleitstück bildet, das zwischen seinen beiden Schenkeln eine Schraubenfeder aufnimmt, die sich mit einem Ende an einem die beiden Schenkel verbindenden Steg und mit dem anderen Ende an einem zwischen den beiden Schenkeln geführten Widerlager abstützt, das aus einer Entriegelungsstellung in eine Verriegelungsstellung ausschwenkbar ist und in der ausgeschwenkten Verriegelungsstellung eine Hinterschneidung des Gehäuses hintergreift, sodass die über das Widerlager am Gehäuse abgestützte Schraubenfeder den mittleren Scharnierlappen in Richtung eines Einzugs in das Gehäuse beaufschlagt. Da der mittlere Scharnierlappen mit einer in Richtung der Schraubenfederachse verlaufenden Durchtrittsöffnung versehen ist, kann das Widerlager durch die Durchtrittsöffnung hindurch axial beaufschlagt und aus der Entriegelungsstellung in die Verriegelungsstellung verschwenkt werden, was einfache Montageverhältnisse schafft, jedoch ohne die durch eine Schraube als Scharnierachse bedingten Nachteile zu vermeiden.

Um für Scharniergelenke zwischen Bügel und Bügelbacken einer Brille einfache Montageverhältnisse zu schaffen ist es außerdem bekannt (EP 0 495 767 A1), den an den Bügelbacken angesetzten mittleren Scharnierlappen, der in eine gegen die Bügelinnenseite offene Aufnahmetasche des Bügels eingreift, mit zwei die Scharnierachse bildenden Achsstummeln zu versehen, die innerhalb der Aufnahmetaschen in Lagerausnehmungen schnappverschlussartig einrasten. Zu diesem Zweck sind die Lagerausnehmungen mit entsprechenden Einführnuten für die Achsstummel versehen.

Zum Einführen von am mittleren Scharnierlappen eines Brillenbügels vorgesehenen Achsstummeln in Lagerausnehmungen einer Aufnahmetasche des Bügelbackens ist es außerdem bekannt (WO 90/01718 A1), die Achsstummel parallel zur Taschenöffnung in die Aufnahmetasche einzuführen, um sie dann nach einer
90°-Drehung des Brillenbügels um seine Längsachse in die Lagerausnehmungen eingreifen zu lassen und in dieser Eingriffsstellung mithilfe eines in der Aufnahmetasche verschiebbar geführten, federbeaufschlagten Stempels festzuhalten, was eine aufwendige Konstruktion bedingt.

Bei einfachen, nicht federbeaufschlagten Brillenscharnieren ist es darüber hinaus bekannt (US 2012/0236253 A1, US 9 341 863 B2) die an einem Scharnierteil vorgesehene Scharnierachse zumindest auf einer Seite abzuflachen, um sie durch eine in seiner Breite an den durch die Abflachung kleineren Durchmesser angepasste Einführnut in die Lagerausnehmung des anderen Scharnierteils einzuführen, sodass die Scharnierteile nach einer gegenseitigen Verdrehung nicht mehr voneinander gelöst werden können.

Der Erfindung liegt somit die Aufgabe zugrunde, ein Federscharnier für eine Brille so auszubilden, dass die mit einer Schraube als Scharnierachse verbundenen Nachteile vermieden werden können, ohne Einbußen in Bezug auf die Funktion und die Montagebedingungen in Kauf nehmen zu müssen.

Ausgehend von einem Federscharnier der eingangs geschilderten Art löst die Erfindung die gestellte Aufgabe dadurch, dass der mittlere Scharnierlappen zwei die Scharnierachse formende, in Lagerbohrungen der Lagergabel eingreifende Achsstummel trägt, die auf der vom Gehäuse abgewandten Seite eine achsparallele Abflachung aufweisen, und dass die Lagergabel in der Strecklage des Bügels quer zur Bügellängsrichtung verlaufende Einführnuten für die Achsstummel mit einer an den zur Abflachung senkrechten Durchmesser der Achsstummel angepassten Nutbreite und mit einer die Abflachung der Achsstummel zugekehrte Nutwand bildet, die tangential zur Lagerbohrung ausgerichtet ist.

Mit dem Vorsehen von zwei vom mittleren Scharnierlappen abstehenden, in Lagerbohrungen der Lagergabel eingreifenden Achsstummeln als Scharnierachse werden die Nachteile einer Scharnierachse in Form einer in die Lagergabel einzuschraubenden Schraube in an sich bekannter Weise vermieden. Es muss allerdings dafür gesorgt werden, dass die entlang von Einführnuten in die Lagerbohrungen eingesetzten Achsstummel beim ordnungsgemäßen Gebrauch des Federscharniergelenks nicht aus den Lagerbohrungen austreten können. Dies gelingt in vorteilhafter Art dadurch, dass die Einführnuten nicht nur zur Anpassung an den kleinsten Durchmesser der einseitig abgeflachten Achsstummel eine Breite kleiner als der Durchmesser der Lagerbohrungen aufweisen, sondern auch tangential so in die Lagerbohrungen münden, dass für die in die Lagerbohrungen eintretenden Achsstummel eine radiale Verlagerung in Richtung der Verschiebeführung des mittleren Scharnierlappens im Gehäuses möglich ist. Da die achsparallele Abflachung der Achsstummel auf der vom Gehäuse abgewandten Seite vorgesehen und folglich der kreiszylindrische Abschnitt der Achsstummel dem Gehäuse zugekehrt ist, werden die Achsstummel durch die Federbeaufschlagung des mittleren Scharnierlappens mit den kreiszylindrischen Abschnitten an die Wandung der Lagerbohrungen angedrückt, was aufgrund der damit verbundenen radialen Versetzung gegenüber den Einführnuten dazu führt, dass ein unbeabsichtigtes Lösen des Scharniergelenks ausgeschlossen werden kann.

Vorteilhafte Konstruktionsbedingungen ergeben sich, wenn die Einführnuten von der dem Bügel zugekehrten Außenseite der Lagergabel ausgehen, weil in diesem Fall die Einführnuten in der Strecklage der Bügel, also in deren Gebrauchslage, durch eine die Außenseite der Lagergabel abdeckende Bügelverlängerung abgedeckt werden können.

Die erfindungsgemäße Lagerung des bügelseitigen, mittleren Scharnierlappens in der Lagergabel des Bügelbackens ist von der konstruktiven Ausgestaltung der Lagerung dieses Scharnierlappens im Gehäuse und der Federbeaufschlagung weitgehend unabhängig. Besonders günstige Montageverhältnisse ergeben sich jedoch dadurch, dass der mittlere Scharnierlappen ein in einer Gehäuseausnehmung verschiebbar geführtes, U-förmiges Gleitstück bildet, das zwischen seinen beiden Schenkeln eine Schraubenfeder aufnimmt, die sich mit einem Ende an einem die beiden Schenkel verbindenden Steg und mit dem anderen Ende an einem zwischen den beiden Schenkeln geführten Widerlager abstützt, das durch eine in Richtung der Schraubenfederachse verlaufende Durchtrittsöffnung des mittleren Scharnierlappens hindurch aus einer Entriegelungsstellung in eine Verriegelungsstellung ausschwenkbar ist und in der ausgeschwenkten Verriegelungsstellung eine Hinterschneidung der Gehäuseausnehmung hintergreift. Das durch den mittleren Scharnierlappen gebildete Gleitstück kann somit zusammen mit der in das Gleitstück eingesetzten Schraubenfeder und dem durch die Schraubenfeder an einem Anschlag gehaltenen Widerlager als Handhabungseinheit in die Gehäuseausnehmung eingeführt werden, um dann das Widerlager mithilfe eines Stiftes durch die Durchtrittsöffnung gegen die Federkraft zu verschieben und in die Verriegelungsstellung zu verschwenken, in der das Widerlager durch die Schraubenfeder in Anlage an der hierfür im Gehäuse vorgesehenen Hinterschneidung gehalten wird.

In der Zeichnung ist der Erfindungsgegenstand beispielsweise dargestellt. Es zeigen
- Fig. 1: ein erfindungsgemäßes Federscharnier in einem zur Scharnierachse parallelen Längsschnitt,
- Fig. 2: dieses Federscharnier in einem Schnitt nach der Linie II-II der Fig. 1 und
- Fig. 3: eine der Fig. 2 entsprechende Darstellung des Federscharniers, jedoch in einer gegenüber der Fig. 2 um 90°eingeschwenkten Bügelstellung.

Das dargestellte Federscharnier weist ein an einem Brillenbügel 1 befestigtes Gehäuse 2 auf, in dem ein ein U-förmiges Gleitstück 3 bildender, mittlerer Scharnierlappen 4 in einer Gehäuseausnehmung 5 verschiebbar geführt ist.

### Das

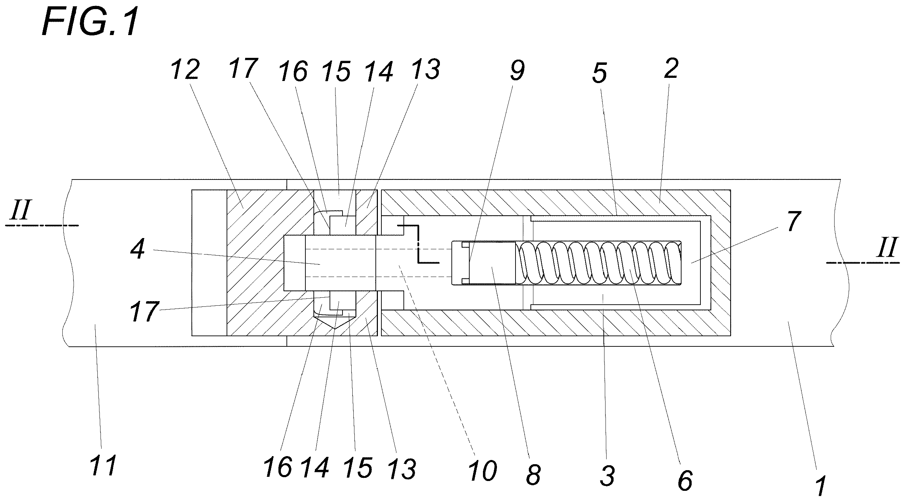

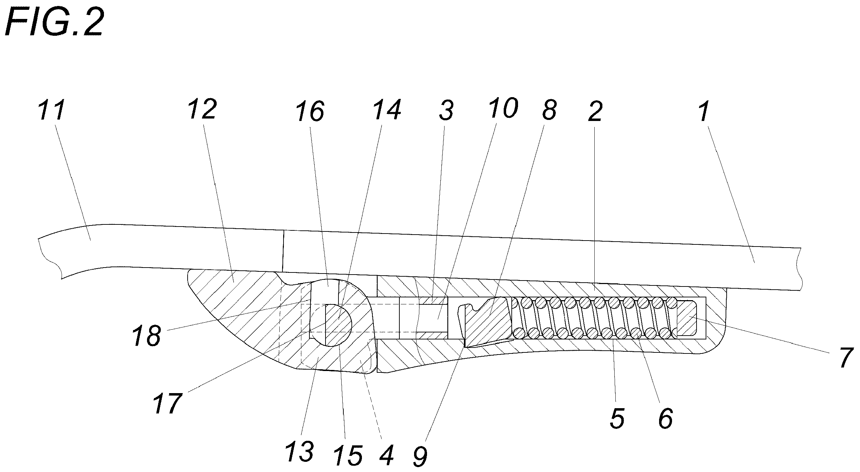

U-förmige Gleitstück 3 nimmt zwischen seinen Schenkeln eine Schraubenfeder 6 auf, die sich mit einem Ende an einem die beiden Schenkel verbindenden Steg 7 und mit dem anderen Ende an einem Widerlager 8 abstützt, das zwischen den Schenkeln des U-förmigen Gleitstücks 3 anschlagbegrenzt geführt wird und aus einer Entriegelungsstellung in eine Verriegelungsstellung ausschwenkbar ist. In der in den Fig. 1 und 2 dargestellten, ausgeschwenkten Verriegelungsstellung hintergreift das Widerlager 8 eine Hinterschneidung 9 der Gehäuseausnehmung 5 und bildet somit eine gehäusefeste Abstützung für die Schraubenfeder 6.

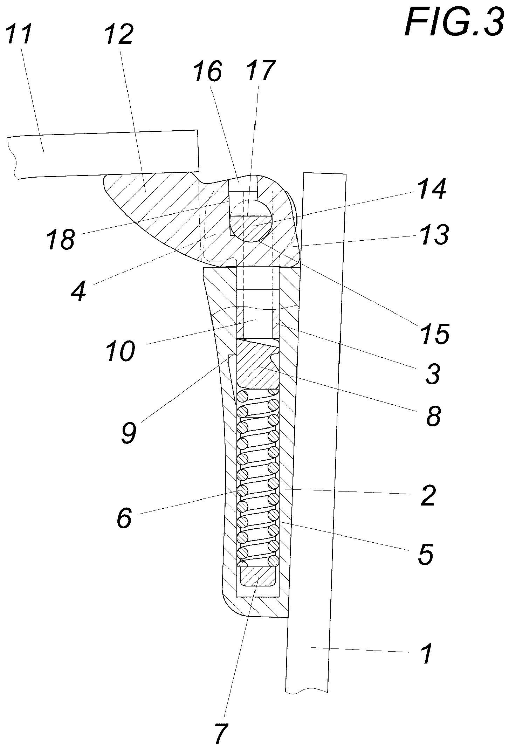

Um das Widerlager 8 aus der vormontierten, anschlagbegrenzten Entriegelungsstellung gemäß der Fig. 3 in die Verriegelungsstellung ausschwenken zu können, ist der mittlere Scharnierlappen 4 mit einer in Richtung der Schraubenfeder 6 verlaufenden Durchtrittsöffnung 10 versehen, die in der in der Fig. 3 angedeuteten eingeschwenkten Bügelstellung von der Bügelstirnseite her zugänglich ist, sodass das Widerlager 8 mithilfe eines Stiftes oder dgl. durch die Durchtrittsöffnung 10 hindurch gegen die Kraft der Schraubenfeder 6 verschoben und beim Erreichen der Hinterschneidung 9 in die Verriegelungsstellung ausgeschwenkt werden kann.

Das Scharnier selbst setzt sich aus dem dem Bügel 1 zugehörigen Scharnierlappen 4 und einer an einem Bügelbacken 11 vorgesehenen Lagergabel 12 zusammen, die den mittleren Scharnierlappen 4 mit ihren Schenkeln 13 umfasst. Zur Lagerung des Scharnierlappens 4 zwischen den Schenkeln 13 der Lagergabel 12 dienen zwei am mittleren Scharnierlappen 4 vorgesehene, die Scharnierachse bildende Achsstummel 14, die in Lagerbohrungen 15 der Schenkel 13 der Lagergabel 12 eingreifen.

Um die Achsstummel 14 in die Lagerbohrungen 15 einführen zu können, sind die Schenkel 13 der Lagergabel 12 mit Einführnuten 16 versehen, die in der Strecklage des Bügels 1 nach den Fig. 1 und 2 quer zur Bügellängsrichtung verlaufen und vorzugsweise von der dem Bügel 1 zugekehrten Außenseite der Lagergabel 12 ausgehen. In diesem Fall können die Einführnuten16 in der Bügelstrecklage durch eine Bügelverlängerung von außen abgedeckt werden, wie dies insbesondere der Fig. 2 entnommen werden kann.

Die Achsstummel 14 weisen auf der vom Gehäuse 2 abgewandten Seite eine achsparallele Abflachung 17 auf. Die Breite der Einführnuten 16 ist an den kleinsten, zur Abflachung 17 senkrechten Durchmesser der Achsstummel 14 angepasst. Die Anordnung ist dabei so getroffen, dass die in der Strecklage des Bügels 1 vom Gleitstück 3 entferntere, die Abflachung 17 der Achsstummel 14 führende Nutwand 18 tangential zur Lagerbohrung 15 verläuft. Die in einer entsprechenden Ausrichtung durch die Einführnuten 16 in die Lagerbohrungen 15 eingeführten Achsstummel 14 können daher innerhalb der Lagerbohrungen 15 gegenüber den Einführnuten 16 radial versetzt werden, sodass die Achsstummel 14 mit ihren kreiszylindrischen Abschnitten an der Wandung der Lagerbohrungen 15 anliegen und in dieser Anlage durch die Schraubenfeder 6 festgehalten werden, die ja den mittleren Scharnierlappen 4 im Sinne eines Einziehens in das Gehäuse 2 beaufschlagt. Aufgrund der Versetzung der Achsstummel 14 gegenüber den Einführnuten 16 wird ein unbeabsichtigter Austritt der Achsstummel 14 aus den Lagerbohrungen 15 entlang der Einführnuten 16 wirksam unterbunden.

Zum Zusammensetzen des Federscharniers wird zunächst der mittlere Scharnierlappen 4 durch ein Einsetzen des Widerlagers 8 und der Schraubenfeder 6 zwischen die Schenkel des U-förmigen Gleitstücks 3 zu einer Handhabungseinheit vormontiert, die mit der Lagergabel 12 gelenkig verbunden wird, indem die Achsstummel 14 entlang der Einführnuten 16 in die Lagerbohrungen 15 durch eine entsprechende Querbewegung des mittleren Scharnierlappens 4 eingeführt werden, bevor das am Bügel 1 vorgesehene Gehäuse 2 auf das Gleitstück 3 aufgeschoben wird. In der eingeschwenkten Bügelstellung nach der Fig. 3 kann dann das Widerlager 8 durch die Durchtrittsöffnung 10 hindurch gegen die Kraft der Schraubenfeder im Gleitstück 3 verschoben werden, bis das Widerlager aus der Entriegelungsstellung in die Verriegelungsstellung ausschwenkt und die Hinterschneidung 9 des Gehäuses 2 hintergreift, womit der Montagevorgang beendet ist.

## Patentansprüche

1. Federscharnier für eine Brille mit einem in einem bügelseitigen Gehäuse (2) entgegen der Kraft einer Schraubenfeder (6) in Bügellängsrichtung anschlagbegrenzt aus dem Gehäuse (2) ausziehbaren, mittleren Scharnierlappen (4), mit einer den mittleren Scharnierlappen (4) aufnehmenden Lagergabel (12) eines Bügelbackens (11) und mit einer den mittleren Scharnierlappen (4) mit der Lagergabel (12) gelenkig verbindenden Scharnierachse, **dadurch gekennzeichnet, dass** der mittlere Scharnierlappen (4) zwei die Scharnierachse formende, in Lagerbohrungen (15) der Lagergabel (12) eingreifende Achsstummel (14) trägt, die auf der vom Gehäuse (2) abgewandten Seite eine achsparallele Abflachung (17) aufweisen, und dass die Lagergabel (12) in der Strecklage des Bügels (1) quer zur Bügellängsrichtung verlaufende Einführnuten (16) für die Achsstummel (14) mit einer an den zur Abflachung (17) senkrechten Durchmesser der Achsstummel (14) angepassten Nutbreite und mit einer die Abflachung (17) der Achsstummel (14) führenden Nutwand (18) bildet, die tangential zur Lagerbohrung (15) ausgerichtet ist.

2. Federscharnier nach Anspruch 1, **dadurch gekennzeichnet, dass** die Einführnuten (16) von der dem Bügel (1) zugekehrten Außenseite der Lagergabel (12) ausgehen.

3. Federscharnier nach Anspruch 1 oder 2, **dadurch gekennzeichnet, dass** der mittlere Scharnierlappen (4) ein in einer Gehäuseausnehmung (5) verschiebbar geführtes, U-förmiges Gleitstück (3) bildet, das zwischen seinen beiden Schenkeln eine Schraubenfeder (6) aufnimmt, die sich mit einem Ende an einem die beiden Schenkel verbindenden Steg (7) und mit dem anderen Ende an einem zwischen den beiden Schenkeln geführten Widerlager (8) abstützt, das durch eine in Richtung der Schraubenfederachse verlaufende Durchtrittsöffnung (10) des mittleren Scharnierlappens (4) hindurch aus einer Entriegelungsstellung in eine Verriegelungsstellung ausschwenkbar ist und in der ausgeschwenkten Verriegelungsstellung eine Hinterschneidung (9) der Gehäuseausnehmung (5) hintergreift.
